# EUROPEAN PATENT SPECIFICATION

(11) **EP 4 305 105 B1**
(45) Date of publication and mention of the grant of the patent: **18.02.2026**
(21) Application number: 22713038.2
(22) Date of filing: 09.03.2022
(51) Int. Cl.: C08L 69/00, C08L 83/10, C08L 51/08, C08K 5/42

(54) **THERMOPLASTIC COMPOSITIONS**
THERMOPLASTISCHE ZUSAMMENSETZUNGEN
COMPOSITIONS THERMOPLASTIQUES

(30) Priority: 12.03.2021 EP 21162288
(43) Date of publication of application: 17.01.2024
(73) Proprietor: SHPP Global Technologies B.V., 4612 PX Bergen op Zoom (NL)
(72) Inventor: LIU, Xing, Shanghai 201319 (CN); SHAN, Wei, Shanghai 201319 (CN); ZHENG, Yun, Shanghai 201319 (CN); GAO, Rui, Shanghai 201319 (CN)
(74) Representative: Balder IP Law, S.L.
(86) International application number: PCT/IB2022/052100
(87) International publication number: WO 2022/189998

(56) References cited:
- EP-B1- 2 691 462
- WO-A1-2019/123029
- US-A1- 2017 129 996

## Description

### CROSS-REFERENCE TO RELATED APPLICATION

This PCT application claims priority to European Application No. 21162288.1, filed March 12, 2021.

### BACKGROUND

This disclosure relates to thermoplastic compositions, and in particular to thermoplastic polycarbonate compositions, methods of manufacture, and uses thereof.

Polycarbonates are useful in the manufacture of articles and components for a wide range of applications, from automotive parts to electronic appliances. Polycarbonate compositions have been described in for instance WO 2019/123029 A1, that discloses a polycarbonate composition having improved chemical resistance. Because of their broad use, particularly in electrical applications, it is desirable to provide polycarbonates with improved hydrolytic stability and electrical tracking resistance.

There accordingly remains a need in the art for thermoplastic compositions that have improved hydrolytic stability and electrical tracking resistance. It would be a further advantage if thermoplastic compositions had good low-temperature impact resistance and good flame retardance.

### SUMMARY

The above-described and other deficiencies of the art are met by a thermoplastic composition comprising: 45-90 wt% of a polycarbonate; 5-15 wt% of a brominated polycarbonate; a polycarbonate-siloxane copolymer in an amount effective to provide 0.2-2 wt% siloxane based on the total weight of the thermoplastic composition; 2-10 wt% of a silicone-containing impact modifier comprising a core-shell impact modifier; 0.1-1 wt% of a flame retardant comprising an alkyl sulfonate salt, aromatic sulfone sulfonate, an aromatic sulfonate salt, or a combination thereof; optionally, 0.5-10 wt% titanium dioxide; optionally, 0.1-1 wt% carbon black, wherein the wt% of each component is based on the total weight of the composition, which totals 100 wt%.

In another aspect, a method of manufacture comprises combining the above-described components to form a thermoplastic composition.

In yet another aspect, an article comprises the above-described thermoplastic composition.

In still another aspect, a method of manufacture of an article comprises molding, extruding, or shaping the above-described thermoplastic composition into an article.

The above described and other features are exemplified by the following detailed description, examples, and claims.

### DETAILED DESCRIPTION

Conventional thermoplastic compositions presently used in electrical connectors may not meet high-end (e.g., 1500 V) application requirements with respect to electrical tracking over the entire 300-600 V range, while also providing hydrolytic stability, low-temperature impact performance, and flame retardance. The inventors hereof have discovered thermoplastic compositions with improved electrical properties over the entire 300-600 V range, improved tracking performance, low temperature impact properties, and flame retardance. The thermoplastic compositions include a brominated polycarbonate, a polycarbonate, a poly(carbonate siloxane) in an amount effective to provide 0.2-2 wt% siloxane, based on the total weight of the composition, a core-shell impact modifier, and a flame retardant comprising. an alkyl sulfonate, an aromatic sulfonate salt, or a combination thereof. The thermoplastic compositions have improved tracking performance, wherein a molded sample of the composition does not show tracking after 50 drops of 0.1% ammonium chloride solution measured across the full range from 300 to 600 V, each as determined by ASTM D-3638-85. The hydrolytic stability of the thermoplastic compositions is also improved, wherein a molded sample of the composition displays improved molecular weight retention as compared with conventional formulations, for example, greater than 85% (1000 hours) as measured in a hydrolytic chamber at 85 °C and 85 % relative humidity. The impact performance is maintained, wherein a molded sample (3.2 mm) of the composition may have a notched Izod impact of greater than 600 Joules per meter (J/m) at -30 ^{c}C.

The thermoplastic compositions include a brominated polycarbonate, a polycarbonate, a poly(carbonate-siloxane), a silicone-containing impact modifier comprising a core-shell impact modifier, a flame retardant comprising an alkyl sulfonate, an aromatic sulfonate salt, or a combination thereof, optionally, titanium dioxide and optionally carbon black. The individual components of the thermoplastic compositions are described in further detail below.

"Polycarbonate" as used herein means a polymer having repeating structural carbonate units of formula (1) 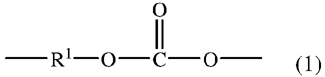 in which at least 60 % of the total number of R¹ groups contain aromatic moieties and the balance thereof are aliphatic, alicyclic, or aromatic. In an aspect, each R¹ is a C₆₋₃₀ aromatic group, that is, contains at least one aromatic moiety. R¹ may be derived from an aromatic dihydroxy compound of the formula HO-R¹-OH, in particular of formula (2)

HO-A¹-Y¹-A²-OH (2)

wherein each of A¹ and A² is a monocyclic divalent aromatic group and Y¹ is a single bond or a bridging group having one or more atoms that separate A¹ from A². In an aspect, one atom separates A¹ from A². Preferably, each R¹ may be derived from a bisphenol of formula (3) 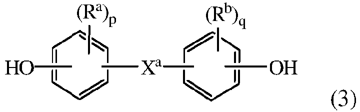 wherein R^{a} and R^{b} are each independently a halogen, C₁₋₁₂ alkoxy, or C₁₋₁₂ alkyl, and p and q are each independently integers of 0 to 4. It will be understood that when p or q is less than 4, the valence of each carbon of the ring is filled by hydrogen. Also in formula (3), X^{a} is a bridging group connecting the two hydroxy-substituted aromatic groups, where the bridging group and the hydroxy substituent of each C₆ arylene group are disposed ortho, meta, or para (preferably para) to each other on the C₆ arylene group. In an aspect, the bridging group X^{a} is single bond, - O-, -S-, -S(O)-, -S(O)₂-, -C(O)-, or a C₁₋₆₀ organic group. The organic bridging group may be cyclic or acyclic, aromatic or non-aromatic, and may further comprise heteroatoms such as halogens, oxygen, nitrogen, sulfur, silicon, or phosphorous. The C₁₋₆₀ organic group may be disposed such that the C₆ arylene groups connected thereto are each connected to a common alkylidene carbon or to different carbons of the C₁₋₆₀ organic bridging group. In an aspect, p and q is each 1, and R^{a} and R^{d} are each a C₁₋₃ alkyl group, preferably methyl, disposed meta to the hydroxy group on each arylene group.

Some illustrative examples of specific dihydroxy compounds include the following: 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododemaye, trans-2,3-bis(4-hydroxyphenyl)-2-butene, 2,2-bis(4-hydroxyphenyl)adamantane, alpha, alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'- tetramethylspiro(bis)indane ("spirobiindane bisphenol"), 3,3-bis(4-hydroxyphenyl)phthalimide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole, resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like, or a combination thereof.

Specific examples of bisphenol compounds of formula (3) include 1,1-bis(4-hydroxyphenyl) methane, 1,1-bis(4-hydroxyphenyl) ethane, 2,2-bis(4-hydroxyphenyl) propane (hereinafter "bisphenol A" or "BPA"), 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-2-methylphenyl) propane, 1.1-bis(4-hydroxy-t-butylphenyl) propane, 3,3-bis(4-hydroxyphenyl) phthalimidine, 2-phenyl-3,3-bis(4-hydroxyphenyl) phthalimidine (PPPBP), and 1,1-bis(4-hydroxy-3-methylphenyl)cyclohexane (DMBPC). A combination may also be used. In a specific aspect, the polycarbonate is a linear homopolymer derived from bisphenol A, in which each of A¹ and A² is p-phenylene and Y¹ is isopropylidene in formula (3).

The thermoplastic compositions may include a homopolycarbonate (wherein each R¹ in the polymer is the same). In an aspect, the homopolycarbonate in the thermoplastic composition is derived from a bisphenol of formula (2), preferably bisphenol A, in which each of A¹ and A² is p-phenylene and Y¹ is isopropylidene in formula (2). The homopolycarbonate may have an intrinsic viscosity, as determined in chloroform at 25°C, of 0.3-1.5 deciliters per gram (dl/gm), preferably 0.45-1.0 dl/gm. The homopolycarbonate may have a weight average molecular weight (Mw) of 10,000-200,000 grams per mol (g/mol), preferably 20,000-100,000 g/mol, as measured by gel permeation chromatography (GPC), using a crosslinked styrenedivinylbenzene column and calibrated to bisphenol A homopolycarbonate references. GPC samples are prepared at a concentration of 1 mg per ml and are eluted at a flow rate of 1.5 ml per minute. In some aspects, the homopolycarbonate is a bisphenol A homopolycarbonate having a Mw of 18,000-35,000 g/mole, preferably 20,000-25,000 g/mol; a Mw of 25,000-35,000 g/mol, preferably 27,000-32,000 g/mol; or a combination thereof, each as measured as described above.

In some aspects, the polycarbonate is a bisphenol A homopolycarbonate. The bisphenol A homopolycarbonate may have: a melt flow rate of 20-35, preferably 25-30 cm³ per 10 min at 300 °C and a 1.2 kg load and a Mw of 20,000-25,000 g/mole, preferably 21,000-23,000 g/mol; preferably a melt flow rate of 25-30 cm³ per 10 min at 300 °C and a 1.2 kg load and a Mw of 20,000-25,000, g/mole, preferably 21,000-23,000 g/mole, each as measured as described above In some aspects, the polycarbonate comprises a linear bisphenol A homopolycarbonate. In some aspects, the polycarbonate comprises a linear bisphenol A polycarbonate homopolymer having a weight average molecular weight of 26,000 to 40,000 grams per mole, preferably 27,000 to 35,000 grams per mole, as determined by gel permeation chromatography using polystyrene standards and calculated for polycarbonate; or a linear bisphenol A polycarbonate homopolymer having a weight average molecular weight of 15,000 to 25,000 grams per mole, preferably 17,000 to 25,000 grams per mole, as determined by gel permeation chromatography using polystyrene standards and calculated for polycarbonate; or a combination thereof.

The polycarbonate may be present, for example, from 45-90 wt%, 60-90 wt% or 70-90 wt%, each based on the total weight of the thermoplastic composition.

The thermoplastic compositions include a brominated polycarbonate that differs from the polycarbonate. A combination of different brominated polycarbonates may be used. The brominated polycarbonate may be an oligomer or a polymer, and may be derived from an aromatic dihydroxy compound of formula (2) wherein each R^{h} is bromine and n is 1 to 4; or a bisphenol of formula (3), wherein X^{a} is as defined for formula (3), p and q are each independently 0 to 4, provided that the sum of p and q is at least 1, and R^{a} is independently at each occurrence C₁₋₃ methyl, C₁₋₃ alkoxy, or bromine, provided that at least one R^{a} is bromine. In an aspect, a combination of two or more different brominated aromatic dihydroxy compounds may be used. Alternatively, the brominated polycarbonate may be derived from a combination of brominated and non-brominated aromatic dihydroxy compounds. If a non-brominated aromatic dihydroxy compound is used, any of the above-described bisphenols (3) may be used. In an aspect, when a non-brominated aromatic dihydroxy compound is used, the non-brominated aromatic dihydroxy compound may be bisphenol A. If a combination of brominated and non-brominated aromatic dihydroxy compounds is used, then preferably the combination includes at least 25 mole % (mol%) of the brominated dihydroxy aromatic compound, more preferably at least 25 to 55 mol% of the brominated dihydric phenol, so as to yield a flame retardant brominated polycarbonate. Branched brominated polycarbonate oligomers may also be used, as may compositions of a linear brominated polycarbonate oligomer and a branched brominated polycarbonate oligomer. Combinations of different brominated copolycarbonate oligomers may be used. Exemplary brominated polycarbonates are disclosed in U.S. Pat. No. 4,923,933 to Curry, U.S. Pat. No. 4,170,700 to Orlando et al., and U.S. Pat. No. 3,929,908 to Orlando et al.

The brominated polycarbonate may have a bromine content of 10 to 50 wt%, 15 to 40 wt%, 20 to 30 wt%, or 24 to 27.5 wt% each based on the weight of the brominated polycarbonate. Optionally the brominated polycarbonate may have phenol or 2,4,6-tribromophenol endcaps. The brominated polycarbonate may have an intrinsic viscosity of 0.2 to 1.5 deciliter per gram, measured in methylene chloride at 25°C. Within this range, the intrinsic viscosity may be 0.4 to 1 deciliter per gram. The brominated polycarbonate may have a weight average molecular weight of 1,000 to 30,000 g/mol, for example 1,000 to 18,000 g/mol, or 2,000 to 15,000 g/mol, or 3,000 to 12,000 g/mol; or, alternatively 15,000 to 25,000 g/mol, or 20,000 to 25,000 g/mol. The brominated polycarbonates may branched or linear, or a combination of branched and linear brominated polycarbonates may be used.

In an aspect, the brominated aromatic dihydroxy compound may be 2,2-bis(3,5-dibromo-4-hydroxyphenyl)propane (2',6,6'-tetrabromo-4,4'-isopropylidenediphenol (TBBPA)), bis(3,5-dibromo-4-hydroxyphenyl)menthanone, or 2,2',6,6'-tetramethyl-3,3',5,5'-tetrabromo-4,4'-biphenol; and the non-brominated aromatic dihydroxy compounds for copolymerization with the brominated aromatic dihydroxy compounds include bisphenol A, bis(4-hydroxyphenyl) methane, 2, 2-bis(4-hydroxy-3-methylphenyl)propane, 4,4-bis(4-hydroxyphenyl)heptane, and (3,3'-dichloro-4,4'-dihydroxydiphenyl)methane. In another preferred aspect, the brominated polycarbonate includes brominated carbonate units derived from TBBPA and carbonate units derived from bisphenol A, and more preferably comprises 30 to 70 wt% of TBBPA and 30 to 70 wt% of bisphenol A, or 45 to 55 wt% of TBBPA and 45 to 55 wt% of bisphenol A.

The thermoplastic compositions may comprise, for example, 5-15 wt%, or 5-10 wt% of the brominated polycarbonate, each based on the total weight of the thermoplastic composition, which totals 100 wt%. The brominated polycarbonate may be used in an amount that contributes 2 to 20 wt% of bromine to the composition, based on the total weight of the composition.

The thermoplastic compositions may have improved impact resistance at -30 °C and/or -40 °C as compared with conventional formulations. In addition to the polycarbonate and the brominated polycarbonate, the thermoplastic compositions nclude a poly(carbonate-siloxane), also referred to in the art as a polycarbonate-polysiloxane copolymer. The polysiloxane blocks comprise repeating diorganosiloxane units as in formula (10) 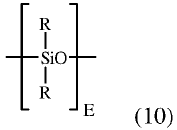 wherein each R is independently a C₁₋₁₃ monovalent organic group. For example, R can be a C₁₋₁₃ alkyl, C₁₋₁₃ alkoxy, C₂₋₁₃ alkenyl, C₂₋₁₃ alkenyloxy, C₃₋₆ cycloalkyl, C₃₋₆ cycloalkoxy, C₆₋₁₄ aryl, C₆₋₁₀ aryloxy, C₇₋₁₃ arylalkylene, C₇₋₁₃ arylalkylenoxy, C₇₋₁₃ alkylarylene, or C₇₋₁₃ alkylaryleneoxy. The foregoing groups can be fully or partially halogenated with fluorine, chlorine, bromine, or iodine, or a combination thereof. In an aspect, where a transparent poly(carbonate-siloxane) is desired, R is unsubstituted by halogen. Combinations of the foregoing R groups can be used in the same copolymer.

The value of E in formula (10) can vary widely depending on the type and relative amount of each component in the thermoplastic composition, the desired properties of the composition, and like considerations. Generally, E has an average value of 2 to 1,000, preferably 2 to 500, 2 to 200, or 2 to 125, 5 to 80, or 10 to 70. In an aspect, E has an average value of 10 to 80 or 10 to 40, and in still another aspect, E has an average value of 40 to 80, or 40 to 70. Where E is of a lower value, e.g., less than 40, it can be desirable to use a relatively larger amount of the poly(carbonate-siloxane) copolymer. Conversely, where E is of a higher value, e.g., greater than 40, a relatively lower amount of the poly(carbonate-siloxane) copolymer can be used. A combination of a first and a second (or more) poly(carbonate-siloxane) copolymers can be used, wherein the average value of E of the first copolymer is less than the average value of E of the second copolymer.

In an aspect, the polysiloxane blocks are of formula (11) 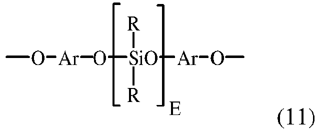 wherein E and R are as defined if formula (10); each R can be the same or different, and is as defined above; and Ar can be the same or different, and is a substituted or unsubstituted C₆₋₃₀ arylene, wherein the bonds are directly connected to an aromatic moiety. Ar groups in formula (11) can be derived from a C₆₋₃₀ dihydroxyarylene compound, for example a dihydroxyarylene compound of formula (3) or (6). Dihydroxyarylene compounds are 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulfide), and 1,1-bis(4-hydroxy-t-butylphenyl) propane.

In another aspect, polysiloxane blocks are of formula (13) 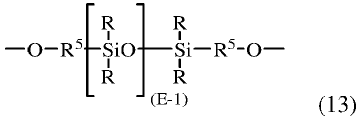 wherein R and E are as described above, and each R⁵ is independently a divalent C₁₋₃₀ organic group, and wherein the polymerized polysiloxane unit is the reaction residue of its corresponding dihydroxy compound. In a specific aspect, the polysiloxane blocks are of formula (14): 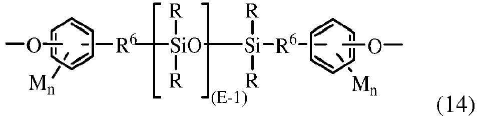 wherein R and E are as defined above. R⁶ in formula (14) is a divalent C₂₋₈ aliphatic group. Each M in formula (14) can be the same or different, and can be a halogen, cyano, nitro, C₁₋₈ alkylthio, C₁₋₈ alkyl, C₁₋₈ alkoxy, C₂₋₈ alkenyl, C₂₋₈ alkenyloxy, C₃₋₈ cycloalkyl, C₃₋₈ cycloalkoxy, C₆₋₁₀ aryl, C₆₋₁₀ aryloxy, C₇₋₁₂ aralkyl, C₇₋₁₂ aralkoxy, C₇₋₁₂ alkylaryl, or C₇₋₁₂ alkylaryloxy, wherein each n is independently 0, 1, 2, 3, or 4.

In an aspect, M is bromo or chloro, an alkyl such as methyl, ethyl, or propyl, an alkoxy such as methoxy, ethoxy, or propoxy, or an aryl such as phenyl, chlorophenyl, or tolyl; R⁶ is a dimethylene, trimethylene or tetramethylene; and R is a C₁₋₈ alkyl, haloalkyl such as trifluoropropyl, cyanoalkyl, or aryl such as phenyl, chlorophenyl or tolyl. In another aspect, R is methyl, or a combination of methyl and trifluoropropyl, or a combination of methyl and phenyl. In still another aspect, R is methyl, M is methoxy, n is one, and R⁶ is a divalent C₁₋₃ aliphatic group. Specific polysiloxane blocks are of the formula 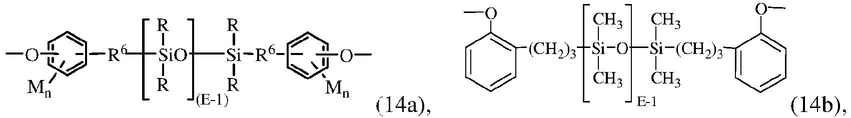 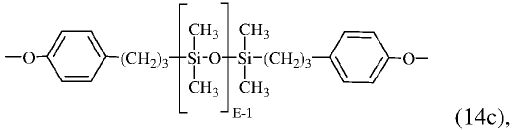 or a combination thereof, wherein E has an average value of 2 to 200, 2 to 125, 5 to 125, 5 to 100, 5 to 50, 20 to 80, or 5 to 20.

Blocks of formula (14) can be derived from the corresponding dihydroxy polysiloxane, which in turn can be prepared effecting a platinum-catalyzed addition between the siloxane hydride and an aliphatically unsaturated monohydric phenol uch as eugenol, 2-alkylphenol, 4-allyl-2-methylphenol, 4-allyl-2-phenylphenol, 4-allyl-2-bromophenol, 4-allyl-2-t-butoxyphenol, 4-phenyl-2-phenylphenol, 2-methyl-4-propylphenol, 2-allyl-4,6-dimethylphenol, 2-allyl-4-bromo-6-methylphenol, 2-allyl-6-methoxy-4-methylphenol and 2-allyl-4,6-dimethylphenol. The poly(carbonate-siloxane) copolymers can then be manufactured, for example, by the synthetic procedure of European Patent Application Publication No. 0 524 731 A1 of Hoover, page 5, Preparation 2.

Transparent poly(carbonate-siloxane) copolymers comprise carbonate units (1) derived from bisphenol A, and repeating siloxane units (14a), (14b), (14c), or a combination thereof (preferably of formula 14a), wherein E has an average value of 4 to 50, 4 to 15, preferably 5 to 15, more preferably 6 to 15, and still more preferably 7 to 10. The transparent copolymers can be manufactured using one or both of the tube reactor processes described in U.S. Patent Application No. 2004/0039145A1 or the process described in U.S. Patent No. 6,723,864 can be used to synthesize the poly(carbonate-siloxane) copolymers.

The poly(carbonate-siloxane) copolymers can comprise 50 to 99 wt% of carbonate units and 1 to 50 wt% siloxane units. Within this range, the poly(carbonate-siloxane) copolymer can comprise 70 to 98 wt%, more preferably 75 to 97 wt% of carbonate units and 2 to 30 wt%, more preferably 3 to 25 wt% siloxane units.

In an aspect, a blend is used, in particular a blend of a bisphenol A homopolycarbonate and a poly(carbonate-siloxane) block copolymer of bisphenol A blocks and eugenol capped polydimethylsiloxane blocks, of the formula 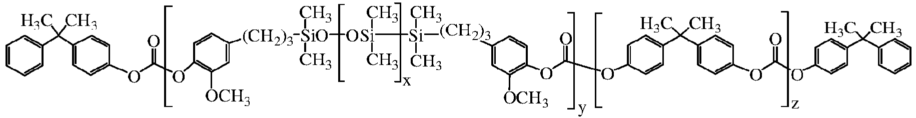 wherein x is 1 to 200, preferably 5 to 85, preferably 10 to 70, preferably 15 to 65, and more preferably 40 to 60; x is 1 to 500, or 10 to 200, and z is 1 to 1000, or 10 to 800. In an aspect, x is 1 to 200, y is 1 to 90 and z is 1 to 600, and in another aspect, x is 30 to 50, y is 10 to 30 and z is 45 to 600. The polysiloxane blocks can be randomly distributed or controlled distributed among the polycarbonate blocks.

In an aspect, the poly(carbonate-siloxane) copolymer comprises 10 wt% or less, preferably 6 wt% or less, and more preferably 4 wt% or less, of the polysiloxane based on the total weight of the poly(carbonate-siloxane) copolymer, and are generally optically transparent. In another aspect, the poly(carbonate-siloxane) copolymer comprises 10 wt% or more, preferably 12 wt% or more, and more preferably 14 wt% or more, of the polysiloxane copolymer based on the total weight of the poly(carbonate-siloxane) copolymer, are generally optically opaque.

In an aspect, the poly(carbonate-siloxane) copolymer comprises greater than 30-70 wt%, preferably 35-65 wt%, more preferably 35-55 wt%, even more preferably 35-45 wt% of the polysiloxane based on the total weight of the poly(carbonate-siloxane) copolymer.

Poly(carbonate-siloxane)s can have a weight average molecular weight of 2,000 to 100,000 g/mol, preferably 5,000 to 50,000 g/mol as measured by gel permeation chromatography using a crosslinked styrene-divinyl benzene column, at a sample concentration of 1 milligram per milliliter, using polystyrene standards and calculated for polycarbonate. Within this range, the poly(carbonate-siloxane) copolymer may have a weight average molecular weight of 21,000 to 50,000 g/mol. Within this range, the weight average molecular weight can be 25,000 to 45,000 g/mol, or 30,000 to 45,000 g/mol, or 32,000 to 43,000 g/mol, or 34,000 to 41,000 g/mol, or 35,000 to 40,000 g/mol. In an aspect, the polycarbonate-siloxane copolymer may have a weight average molecular weight of 26,000 to 45,000 g/mol, or 30,000 to 45,000 g/mol, or 35,000 to 40,000 g/mol and measured as described above.

The poly(carbonate-siloxane)s can have a melt volume flow rate, measured at 300°C/1.2 kg, of 1 to 50 cubic centimeters per 10 minutes (cc/10 min), preferably 2 to 30 cc/10 min. Combinations of the poly(carbonate-siloxane)s of different flow properties can be used to achieve the overall desired flow property.

In some aspects, the thermoplastic compositions are "substantially free of a poly(carbonate siloxane) copolymer having a siloxane content of less than 30 wt% based on the weight of the copolymer." As used herein, "substantially free of a poly(carbonate siloxane) copolymer having a siloxane content of less than 30 wt% based on the weight of the copolymer" means 5 wt% or less, 1 wt% or less, 0.5 wt% or less, 0.1 wt% or less, 0.05 wt% or less, 0.01 wt% or less, or less than 0.01 wt%, each based on the total weight of the thermoplastic composition. In some aspects, an α,β-unsaturated glycidyl ester copolymer impact modifier is absent from the thermoplastic compositions. In some aspects, the thermoplastic compositions are "substantially free of a poly(carbonate siloxane) copolymer having a siloxane content of less 20 wt% or less based on the weight of the copolymer." As used herein, "substantially free of a poly(carbonate siloxane) copolymer having a siloxane content of 20 wt% or less based on the weight of the copolymer" means 5 wt% or less. 1 wt% or less, 0.5 wt% or less, 0.1 wt% or less, 0.05 wt% or less, 0.01 wt% or less, or less than 0.01 wt%, each based on the total weight of the thermoplastic composition. In some aspects, the thermoplastic compositions are "substantially free of a poly(carbonate siloxane) copolymer having a siloxane content of 10 wt% or less based on the weight of the copolymer." As used herein, "substantially free of a poly(carbonate siloxane) copolymer having a siloxane content of 10 wt% or less based on the weight of the copolymer" means 5 wt% or less, 1 wt% or less, 0.5 wt% or less, 0.1 wt% or less, 0.05 wt% or less, 0.01 wt% or less, or less than 0.01 wt%, each based on the total weight of the thermoplastic composition. In some aspects, a poly(carbonate siloxane) copolymer having a siloxane content of less than 30 wt%, a poly(carbonate siloxane) copolymer having a siloxane content of 20 wt% or less, a poly(carbonate siloxane) copolymer having a siloxane content of 10 wt% or less, or a combination thereof is absent from the thermoplastic compositions.

The poly(carbonate-siloxane)s may be present, for example, in amount effective to provide 0.2-2 wt%, or 0.2-1 wt% siloxane, each based on the total weight of the composition.

Polycarbonates may be manufactured by processes such as interfacial polymerization and melt polymerization, which are known, and are described, for example, in WO 2013/175448 A1 and WO 2014/072923 A1. An end-capping agent (also referred to as a chain stopper agent or chain terminating agent) may be included during polymerization to provide end groups, for example monocyclic phenols such as phenol, p-cyanophenol, and C₁₋₂₂ alkyl-substituted phenols such as p-cumyl-phenol, resorcinol monobenzoate, and p-and tertiarybutyl phenol, monoethers of diphenols, such as p-methoxyphenol, monoesters of diphenols such as resorcinol monobenzoate, functionalized chlorides of aliphatic monocarboxylic acids such as acryloyl chloride and methacryoyl chloride, and mono-chloroformates such as phenyl chloroformate, alkyl-substituted phenyl chloroformates, p-cumyl phenyl chloroformate, and toluene chloroformate. Combinations of different end groups may be used. Branched polycarbonate blocks may be prepared by adding a branching agent during polymerization, for example trimellitic acid, trimellitic anhydride, trimellitic trichloride, tris-p-hydroxyphenylethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents may be added at a level of 0.05 to 2.0 wt. %. Combinations comprising linear polycarbonates and branched polycarbonates may be used.

The thermoplastic compositions include a silicon-containing impact modifier comprising a core-shell impact modifier. In some aspects, the core-shell impact modifier is a core-shell silicone-(meth)acrylate impact modifier that includes a rubbery silicone core and a grafted rigid (meth)acrylate shell rigid shell. The silicone core may comprise dimethyl siloxane units. The (meth)acrylate monomers used to form the shell are generally a combination of a monofunctional and a copolymerizable polyfunctional (meth)acrylate monomer. Examples of monofunctional (meth)acrylate monomers include branched or straight chain (C₁₋₈ alkyl) (meth)acrylates and glycidyl (meth)acrylate, and examples of copolymerizable polyfunctional monomers include allyl (meth)acrylate, ethylene glycol dimethacrylate, and 1,3-butylene glycol dimethacrylate. Preferred monomers are the C₁₋₆ alkyl methacrylates such as methyl methacrylate. Other monomers may optionally be present in the silicone core or the rigid shell, for example, styrene, α-methylstyrene, halogen or C₁₋₃ alkyl substituted styrene, acrylonitrile, methacrylonitrile, maleic acid, maleic anhydride, C₁₋₄ alkyl and phenyl N-substituted maleimide, divinyl benzene, triallyl cyanurate, triallyl isocyanurate, diallyl phthalate, and the like.

Methods for preparing the core-shell silicone-(meth)acrylate impact modifiers are known in the art, as described for example in U.S. Patent Nos. 7,615,594, 4,888,388, and 4,963,619. The silicone (meth)acrylate impact modifiers may be prepared by emulsion polymerization, wherein, for example a silicone rubber monomer is reacted with a first graft link monomer to form a silicone rubber latex, in the presence of a surfactant such as dodecylbenzenesulfonic acid. Alternatively, a cyclic siloxane such as cyclooctamethyltetrasiloxane and a tetraethoxyorthosilicate may be reacted with a first graft link monomer such as (gamma-methacryloxypropyl)methyl dimethoxysilane. The monofunctional (meth)acrylate monomer is then polymerized with the silicone rubber particles, optionally in presence of a cross linking monomer, such as allyl methacrylate, in the presence of a free radical generating polymerization catalyst such as benzoyl peroxide. In an aspect the impact modifier is prepared by an emulsion polymerization process that is free of basic materials such as alkali metal salts of C₆₋₃₀ fatty acids, for example sodium stearate, lithium stearate, sodium oleate, potassium oleate, and the like, alkali metal carbonates, amines such as dodecyl dimethyl amine, dodecyl amine, and the like, and ammonium salts of amines. Such materials are commonly used as surfactants in emulsion polymerization, and may catalyze transesterification or degradation of polycarbonates. Instead, ionic sulfate, sulfonate, or phosphate surfactants may be used in preparing the impact modifiers, particularly the elastomeric substrate portion of the impact modifiers. Useful surfactants include, for example, C₁₋₂₂ alkyl or C₇₋₂₅ alkylaryl sulfonates, C₁₋₂₂ alkyl or C₇₋₂₅ alkylaryl sulfates, C₁₋₂₂ alkyl or C₇₋₂₅ alkylaryl phosphates, substituted silicates, or a combination thereof. A specific surfactant is a C₆₋₁₆, preferably a C₈₋₁₂ alkyl sulfonate. This emulsion polymerization process is described and disclosed in various patents and literature of such companies as Dow and General Electric Company.

The core-shell silicone-(meth)acrylate impact modifier may have a rubber content of 30 to 90 wt%; and a silicon core content of 50 to 80 wt%, or 60 to 70 wt%, or 65 to 75 wt%. This silicone (meth)acrylate impact modifier may have an average particle size of 100 nanometers to 2 micrometers. In an aspect, the particle size is 200 to 400 nm, or greater than 400 nm, or greater than 500 nm.

Specific core-shell silicone-(meth)acrylate impact modifiers that may be used include those available commercially, e.g., from Mitsubishi Rayon Co. Ltd., under the trade names METABLEN S-2001, METABLEN S-2100, METABLEN S-2200, and METABLEN S-2501.

The thermoplastic composition may include, for example, 2-10 wt%, 3-9 wt%, or 4-8 wt% of the silicon-containing impact modifier comprising a core-shell impact modifier, each based on the total weight of the thermoplastic composition.

The thermoplastic compositions may be substantially free of an α,β-unsaturated glycidyl ester copolymer impact modifier. The α,β-unsaturated glycidyl ester repeating units may have the structure: 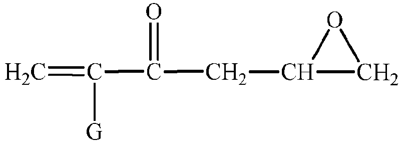 wherein G is hydrogen or a C₁₋₁₀ alkyl. Exemplary α,β-unsaturated glycidyl ester repeating units include glycidyl acrylate, glycidyl methacrylate, and glycidyl ethacrylate. In addition to the α,β-unsaturated glycidyl ester repeating units, the α,β-unsaturated glycidyl ester copolymer may further comprise repeating units derived from an α-olefin, for example ethylene, propylene, 1-butene, and 1-hexene. In some aspects, the α-olefin is ethylene. The α,β-unsaturated glycidyl ester-copolymer may further comprise repeating units derived from a vinyl ester or a C₁₋₁₂ alkyl (meth)acrylate. Examples of vinyl esters include vinyl acetate and vinyl propionate. Examples of alkyl (meth)acrylates include methyl acrylate, ethyl acrylate, butyl acrylate, 2-ethylhexyl acrylate, methyl methacrylate, ethyl methacrylate, butyl methacrylate, and 2-ethylhexyl methacrylate. In some aspects, the C₁₋₁₂ alkyl (meth)acrylate repeating units are methyl acrylate. In some aspects, the α,β-unsaturated glycidyl ester copolymer impact modifier is a copolymer of a α,β-unsaturated glycidyl ester repeating units and α-olefin repeating units. In other aspects, the α,β-unsaturated glycidyl ester copolymer impact modifier is a terpolymer of α,β-unsaturated glycidyl ester repeating units, α-olefin repeating units, and a vinyl ester repeating units, C₁₋₁₂ alkyl (meth)acrylate repeating units, or a combination thereof. In some aspects, the α,β-unsaturated glycidyl ester copolymer impact modifier comprises 60 to 99 wt% α-olefin repeating units, 0.1 to 20 wt% α,β-unsaturated glycidyl ester repeating units, and 0 to 39 wt% of vinyl ester repeating units, C₁₋₁₂ alkyl (meth)acrylate repeating units, or a combination thereof. The α,β-unsaturated glycidyl ester copolymer impact modifiers may include poly(ethylene-co-glycidyl acrylate) (E-GA), poly(ethylene-co-glycidyl methacrylate) (E-GMA), poly(ethylene-co-glycidyl methacrylate-co-methyl acrylate) (E-GMA-MA), poly(ethylene-co-glycidyl methacrylate-co-ethyl acrylate) (E-GMA-EA), poly(ethylene-co-glycidyl methacrylate-co-vinyl acetate) (E-GMA-VA), or a combination thereof. In some aspects, the α,β-unsaturated glycidyl ester copolymer impact modifier is poly(ethylene-co-glycidyl methacrylate), poly(ethylene-co-methyl acrylate-co-glycidyl methacrylate), or a combination thereof. Commercially available α,β-unsaturated glycidyl ester copolymer impact modifiers include LOTADER AX8840 (E-GMA), and LOTADER AX8900, LOTADER AX8920, and LOTADER AX8950 (E-GMA-MA).

The term "substantially free of an α,β-unsaturated glycidyl ester copolymer impact modifier" means 1 wt% or less, 0.5 wt% or less, 0.1 wt% or less, 0.05 wt% or less, 0.01 wt% or less, or less than 0.01 wt%, each based on the total weight of the thermoplastic composition. In some aspects, an α,β-unsaturated glycidyl ester copolymer impact modifier is absent from the thermoplastic compositions.

The thermoplastic compositions include a flame retardant comprising an alkyl sulfonate salt, an aromatic sulfone sulfonate, an aromatic sulfonate salt, or a combination thereof. Alkyl sulfonate salts include, for example salts of C₂₋₁₆ alkyl sulfonates such as potassium perfluorobutane sulfonate (Rimar salt), potassium perfluoroctane sulfonate, and tetraethylammonium perfluorohexane sulfonate. Aromatic sulfonate salts include, for example, sodium benzene sulfonate, sodium toluene sulfonate (NATS), and the like. Salts of aromatic sulfone sulfonates include potassium diphenylsulfone sulfonate (KSS) and the like. In addition to the flame retardant comprising an alkyl sulfonate salt, an aromatic sulfone sulfonate, an aromatic sulfonate salt, or a combination thereof, the thermoplastic compositions may include salts formed by reacting for example an alkali metal or alkaline earth metal (e.g., lithium, sodium, potassium, magnesium, calcium and barium salts) and an inorganic acid complex salt, for example, an oxo-anion (e.g., alkali metal and alkaline-earth metal salts of carbonic acid, such as Na₂CO₃, K₂CO₃, MgCO₃, CaCO₃, and BaCO₃, or a fluoro-anion complex such as Li₃AlF₆, BaSiF₆, KBF₄, K₃AlF₆, KAlF₄, K₂SiF₆, or Na₃AlF₆ or the like. Rimar salt and KSS and NATS, alone or in combination with other flame retardants, are particularly useful. The flame retardant comprising an alkyl sulfonate salt, an aromatic sulfone sulfonate, an aromatic sulfonate salt, or a combination thereof may be present from 0.1-1 wt%, or 0.1-0.5 wt%, based on the total weight of the composition.

The thermoplastic compositions may include titanium dioxide and may include carbon black. The titanium dioxide may be present, for example, from 0.5-10 wt%, 0.2-2 wt%, or 0.5-2 wt% each based on the total weight of the thermoplastic composition. Carbon black may be present, for example, from 0.1-1 wt%, or 0.1-0.5 wt% each based on the total weight of the thermoplastic composition.

Additional colorants such as pigment and dye additives other than carbon black and titanium dioxide may also be present. Useful pigments may include, for example, inorganic pigments such as metal oxides and mixed metal oxides such as zinc oxide, titanium dioxides, iron oxides, or the like; sulfides such as zinc sulfides, or the like; aluminates; sodium sulfo-silicates sulfates, chromates, or the like; carbon blacks; zinc ferrites; ultramarine blue; organic pigments such as azos, di-azos, quinacridones, perylenes, naphthalene tetracarboxylic acids, flavanthrones, isoindolinones, tetrachloroisoindolinones, anthraquinones, enthrones, dioxazines, phthalocyanines, and azo lakes; Pigment Red 101, Pigment Red 122, Pigment Red 149, Pigment Red 177, Pigment Red 179, Pigment Red 202, Pigment Violet 29, Pigment Blue 15, Pigment Blue 60, Pigment Green 7, Pigment Yellow 119, Pigment Yellow 147, Pigment Yellow 150, and Pigment Brown 24; or a combination thereof.

Dyes are generally organic materials and include coumarin dyes such as coumarin 460 (blue), coumarin 6 (green), nile red or the like; lanthanide complexes; hydrocarbon and substituted hydrocarbon dyes; polycyclic aromatic hydrocarbon dyes; scintillation dyes such as oxazole or oxadiazole dyes; aryl- or heteroaryl-substituted poly (C₂₋₈) olefin dyes; carbocyanine dyes; indanthrone dyes; phthalocyanine dyes; oxazine dyes; carbostyryl dyes; napthalenetetracarboxylic acid dyes; porphyrin dyes; bis(styryl)biphenyl dyes; acridine dyes; anthraquinone dyes; cyanine dyes; methine dyes; arylmethane dyes; azo dyes; indigoid dyes, thioindigoid dyes, diazonium dyes; nitro dyes; quinone imine dyes; aminoketone dyes; tetrazolium dyes; thiazole dyes; perylene dyes, perinone dyes; bis-benzoxazolylthiophene (BBOT); triarylmethane dyes; xanthene dyes; thioxanthene dyes; naphthalimide dyes; lactone dyes; fluorophores such as anti-stokes shift dyes which absorb in the near infrared wavelength and emit in the visible wavelength, or the like; luminescent dyes such as 7-amino-4-methylcoumarin; 3-(2'-benzothiazolyl)-7-diethylaminocoumarin; 2-(4-biphenylyl)-5-(4-t-butylphenyl)-1,3,4-oxadiazole; 2,5-bis-(4-biphenylyl)-oxazole; 2,2'-dimethyl-p-quaterphenyl; 2,2-dimethyl-p-terphenyl; 3,5,3ʺʺ,5ʺʺ-tetra-t-butyl-p-quinquephenyl; 2,5-diphenylfuran; 2,5-diphenyloxazole; 4,4'-diphenylstilbene; 4-dicyanomethylene-2-methyl-6-(p-dimethylaminostyryl)-4H-pyran; 1,1'-diethyl-2,2'-carbocyanine iodide; 3,3'-diethyl-4,4',5,5'-dibenzothiatricarbocyanine iodide; 7-dimethylamino-1-methyl-4-methoxy-8-azaquinolone-2; 7-dimethylamino-4-methylquinolone-2; 2-(4-(4-dimethylaminophenyl)-1,3-butadienyl)-3-ethylbenzothiazolium perchlorate; 3-diethylamino-7-diethyliminophenoxazonium perchlorate; 2-(1-naphthyl)-5-phenyloxazole; 2,2'-p-phenylen-bis(5-phenyloxazole); rhodamine 700; rhodamine 800; pyrene, chrysene, rubrene, coronene, or the like; or a combination thereof.

The thermoplastic compositions may include various additives ordinarily incorporated into polymer compositions of this type, with the proviso that the additive(s) are selected so as to not significantly adversely affect the desired properties of a thermoplastic composition, in particular electrical tracking resistance, flame retardant performance, and/or low-temperature impact properties. Such additives may be mixed at a suitable time during the mixing of the components for forming the composition. Additives include fillers, reinforcing agents, antioxidants, heat stabilizers, light stabilizers, ultraviolet (UV) light stabilizers, plasticizers, lubricants, mold release agents, antistatic agents, colorants such as such as titanium dioxide, carbon black, and organic dyes, surface effect additives, radiation stabilizers, flame retardants, and anti-drip agents. A combination of additives may be used, for example a combination of an anti-drip agent, a UV stabilizer, and a colorant. In general, the additives are used in the amounts generally known to be effective. The additive composition may be present, for example, from 0.01 to 10 wt%, 0.01-5.0 wt%, or 0.01-3 wt%, each based on the total weight of the thermoplastic composition.

The thermoplastic compositions may be manufactured by various methods known in the art. For example, the powdered polycarbonate(s), and other optional components are first blended, optionally with any fillers, in a high speed mixer or by hand mixing. The blend is then fed into the throat of a twin-screw extruder via a hopper. Alternatively, at least one of the components may be incorporated into the composition by feeding it directly into the extruder at the throat or downstream through a sidestuffer, or by being compounded into a masterbatch with a desired polymer and fed into the extruder. The extruder is generally operated at a temperature higher than that necessary to cause the composition to flow. The extrudate may be immediately quenched in a water bath and pelletized. The pellets so prepared may be one-fourth inch long or less as desired. Such pellets may be used for subsequent molding, shaping, or forming.

As discussed above, the thermoplastic compositions are formulated to have excellent physical properties, including excellent hydrolytic stability. Hydrolytic stability concerns the ability of a product to withstand chemical decomposition through hydrolysis, for instance by maintaining molecular weight after prolonged exposure to water. For high-end applications, such as at voltages of 1500, good hydrolytic stability and electrical tracking performance that does not compromise impact and flame retardant performance is desirable.

A molded sample of the thermoplastic composition may retain greater than 85 % molecular weight after 1000 hours in a hydrolytic chamber at 85 °C and 85 % relative humidity.

A molded sample of the thermoplastic composition can retain at least 60 %, preferably at least 70 %, 80 %, 85%, 90 %, or 95 % notched Izod impact strength as measured at 23°C according to ASTM D256 after 1000 hours in a hydrolytic chamber at 85°C and 85 % relative humidity.

The thermoplastic compositions may have excellent electrical tracking performance. The number of drops required to cause tracking may be greater than or equal to 50 drops as determined according to ASTM D-3638-85 from 300 V to 600 V. In some aspects, at 600 V, the number of drops required to cause tracking may be greater than or equal to 50 drops as determined according to ASTM D-3638-85. In some aspects, at 500 V, the number of drops required to cause tracking may be greater than or equal to 50 drops as determined according to ASTM D-3638-85. In some aspects, at 400 V, the number of drops required to cause tracking may be greater than or equal to 50 drops as determined according to ASTM D-3638-85. In some aspects, at 300 V, the number of drops required to cause tracking may be greater than or equal to 50 drops as determined according to ASTM D-3638-85.

A molded sample of the thermoplastic composition may have good low-temperature impact properties. A molded sample of the thermoplastic composition having a thickness of 3.2 millimeters may have a Notched Izod Impact (NII) strength of greater than 600 Joules per meter (J/m) in accordance with ASTM D256 at -30 °C. A molded sample of the thermoplastic composition having a thickness of 3.2 millimeters may have a Notched Izod Impact (NII) strength of greater than 600 Joules per meter (J/m) in accordance with ASTM D256 at -40 °C.

A molded sample may have a UL-94 flammability test rating of V0 at a thickness of 1.5 millimeter, a UL-94 flammability test rating of V0 at a thickness of 1.2 millimeter, or a combination thereof.

Shaped, formed, or molded articles comprising the polycarbonate compositions are also provided. The thermoplastic compositions can be molded into useful shaped articles by a variety of methods, such as injection molding, extrusion, rotational molding, blow molding and thermoforming. Some example of articles include computer and business machine housings such as housings for monitors, handheld electronic device housings such as housings for cell phones, electrical connectors, and the like. In addition, the polycarbonate compositions can be used for such applications as electronic components, preferably electronic connectors.

This disclosure is further illustrated by the following examples, which are nonlimiting.

### EXAMPLES

The following components are used in the examples. Unless specifically indicated otherwise, the amount of each component is in wt%, based on the total weight of the composition.

The materials shown in Table 1 were used.

**Table 1.**

| Component | Description | Source |
|---|---|---|
| PC-1 | Linear bisphenol A polycarbonate, CAS Reg. No, 25971-63-5, having a molecular weight (Mw) of 30,000 - 31,000 grams per mole, as determined by gel permeation chromatography using polystyrene standards and calculated for polycarbonate, produced by interfacial polymerization and endcapped with p-cumylphenol | SABIC |
| PC-2 | Linear bisphenol A polycarbonate having a Mw of 20,000-22,000 grams per mole, as determined by gel permeation chromatography using polystyrene standards and calculated for polycarbonate, produced by interfacial polymerization and endcapped with p-cumylphenol | SABIC |
| Br-PC | BPA-co- 2,6-tetrabromo BPA copolycarbonate, CAS Reg. No. 156042-31-8, 26 wt% bromine content, Mw = 22,000-24,000 g/mol as per GPC using polystyrene standards and calculated for polycarbonate. | SABIC |
| PC-Si | Polycarbonate-siloxane copolymer having a siloxane content of 40 weight percent, average PDMS block length of 45 units, having a Mw of 37,000-38,000 grams per mole as determined by gel permeation chromatography using polystyrene standards and calculated for polycarbonate, produced by interfacial polymerization | SABIC |
| UVA234 | 2-(2-hydroxy-3,5-di-cumyl)benzotriazole, CAS Reg. No. 70321-86-7 | CIBA |
| IM-Si | Core-shell impact modifier having a silicone elastomer core and a methyl(methacrylate) (MMA) copolymer shell, CAS Reg. No. 143106-82-5, having a particle size of 200-400 nm, available as METABLEN S-2501 | MITSUBISHI RAYON CO |
| KSS | Potassium diphenylsulfone sulfonate, CAS Reg. No. 63316-43-8 | Arichem |
| TSAN | Encapsulated Polytetrafluoroethylene, CAS Reg. No. 9002-84-0, having the tradename TSAN, with 47-53 wt% poly(tetrafluoroethylene) | SABIC |
| PETS | Pentaerythritol tetrastearate, >90% esterified | Faci |
| Phosphite | Tris(2,4-di-tert-butylphenyl) phosphite, available as IRGAFOS 168 | BASF |
| TiO₂ | Titanium dioxide, CAS No. 13463-67-7 | Kronos |
| CB | Carbon black, CAS No. 1333-86-4 | Cabot |

The testing samples were prepared as described below and the following test methods were used.

Typical compounding procedures are described as follows: All raw materials are pre-blended and then extruded using a twin extruder. The composition was melt-kneaded, extruded, cooled through a water bath and pelletized. A typical extrusion profile is listed in Table 2.

**Table 2.**

| Parameter | Unit | Value |
|---|---|---|
| Die | mm | 3 |
| Zone 1 Temp | °C | 50 |
| Zone 2 Temp | °C | 100 |
| Zone 3-11 Temp | °C | 270 |
| Die Temp | °C | 270 |
| Screw speed | rpm | 400 |
| Throughput | kg/hr | 40 |
| Side feeder speed | rpm | 250 |

The extruded pellets were molded into testing specimens after drying the extruded pellets at 120 °C for 3 hours using injection molding (for parameters see Table 3).

**Table 3**

| Parameters | Unit | CTI test chip | Izod bar | Flame bar |
|---|---|---|---|---|
| Cnd: Pre-drying time | Hour | 3 | 3 | 3 |
| Cnd: Pre-drying temp | °C | 120 | 120 | 120 |
| Hopper temp | °C | 50 | 50 | 50 |
| Zone 1 temp | °C | 300 | 275 | 300 |
| Zone 2 temp | °C | 300 | 280 | 300 |
| Zone 3 temp | °C | 300 | 285 | 300 |
| Nozzle temp | °C | 300 | 280 | 300 |
| Mold temp | °C | 100 | 75 | 100 |
| Screw speed | rpm | 100 | 100 | 100 |
| Back pressure | kgf/cm² | 68 | 68 | 68 |
| Injection speed | mm/s | 30 | 30 | 30 |
| Max. injection pressure | kgf/cm² | 1200 | 1200 | 1200 |
| Molding Machine | NONE | FANUC | FANUC | Netstal |
| Mold Type | NONE | Color chip step 1/2 | Axxicon Izod | ULA-1.5mm |

Sample preparation and testing methods are described in Table 4.

**Table 4.**

| Property | Standard | Conditions | Specimen Type |
|---|---|---|---|
| Mw | SABIC | GPC | Bar-63.5mm x 12.7mm x 3.2 mm |
| MVR | ASTM D1238-04 | 300°C using a 1.2-kilogram weight, over 10 minutes | |
| CTI | ASTM D3638 | 300V, 400V, 500V, 600V | Color chip-90mm x 1mm/2mm |
| Tensile | ASTM D638 | 23 °C, 3.2 mm | Bar- 57.00*13.00*3.18*166mm |
| Notched Izod | ASTM D256 | 23 °C, -30 °C, and -40 °C, 3.2 mm | Bar-63.5mm x 12.7mm x 3.2 mm |
| Flammability | UL 94 | Vertical Burning | Bar-127mm x 12.7mm x 3mm/1mm |

For hydrolytic stability assessments, Izod bars were placed into a hydrolytic chamber at 85 °C and 85% relative humidity (RH) for pre-determined time intervals. The samples were then removed from the ovens for characterization of molecular weight (Mw) and impact properties. Hydrolytic stability was assessed by comparison of the weight average molecular weight of polycarbonate before and after hydrolytic stress as described above. The data was converted to % retention of the initial Mw and the data are shown in the following tables indicated as "Dual 85, Mw retention." Mw was determined by gel permeation chromatography (GPC). Hydrolytic stability was assessed by comparison of Notched Izod impact strength (NII) at 23°C of a formulation before and after hydrolytic stress.

Flammability tests were performed on samples at thicknesses of 1.5 and 1.2 mm in accordance with the Underwriter's Laboratory (UL) UL 94 standard. In this report the following definitions are used as shown in Table 5. Total flame-out-times for all 5 bars (FOT = t1 + t2) were determined. V-ratings were obtained for every set of 10 bars.

**Table 5**

| | t₁ and/or t₂ | 5-bar FOT | burning drips |
|---|---|---|---|
| v0 | <10 | <50 | no |
| V1 | <30 | <250 | No |
| V2 | <30 | <250 | Yes |
| N.R. (no rating) | >30 | >250 | |

### Examples 1-8

Table 6 shows the compositions and properties for Comparative Examples 1-5 and Examples 6-8.

**Table 6**

| Components | Units | 1* | 2* | 3* | 4* | 5* | 6 | 7 | 8 |
|---|---|---|---|---|---|---|---|---|---|
| PC-1 | wt% | 85.74 | 84.44 | 82.44 | 79.44 | 76.44 | 82.44 | 83.74 | 75.24 |
| PC-2 | wt% | 5 | 5 | 5 | 5 | 5 | 5 | 5 | 5 |
| Br PC | wt% | 5 | 5 | 5 | 8 | 8 | 5 | 5 | 12.5 |
| PC-Si | wt% | 0 | 0 | 0 | 0 | 0 | 2 | 2 | 1 |
| IM-Si | wt% | 3 | 3 | 5 | 5 | 8 | 3 | 3 | 5 |
| KSS | wt% | 0.3 | 0.3 | 0.3 | 0.3 | 0.3 | 0.3 | 0.3 | 0.3 |
| PETS | wt% | 0.3 | 0.3 | 0.3 | 0.3 | 0.3 | 0.3 | 0.3 | 0.3 |
| UVA | wt% | 0.3 | 0.3 | 0.3 | 0.3 | 0.3 | 0.3 | 0.3 | 0.3 |
| TSAN | wt% | 0.3 | 0.3 | 0.3 | 0.3 | 0.3 | 0.3 | 0.3 | 0.3 |
| Phosphite | wt% | 0.06 | 0.06 | 0.06 | 0.06 | 0.06 | 0.06 | 0.06 | 0.06 |
| CB | wt% | | 0.3 | 0.3 | 0.3 | 0.3 | 0.3 | | |
| TiO₂ | wt% | | 1 | 1 | 1 | 1 | 1 | | |
| Total | wt% | 100 | 100 | 100 | 100 | 100 | 100 | 100 | 100 |
| MVR, 300 °C, 1.2 kg | cm³/10 min | 7.7 | 7.7 | 6.8 | 6.9 | 6.2 | 7.8 | 7 | 5.7 |
| V0 UL-94 flame test rating, 1.5 mm | | Pass | Pass | Pass | Pass | Pass | Pass | Pass | Pass |
| V0 UL-94 flame test rating, 1.2 mm | | Pass | Pass | Fail | Pass | Fail | Pass | Pass | Pass |
| Tensile elongation | | 113% | 107% | 113% | 111% | 107% | 112% | 117% | 99% |
| NII, 23 °C | J/m | 883 | 856 | 831 | 786 | 722 | 870 | 891 | 826 |
| NII, -30 °C | J/m | 411 | 380 | 699 | 639 | 652 | 755 | 776 | 672 |
| NII, -40 °C | J/m | 222 | 246 | 441 | 370 | 638 | 658 | 684 | 534 |
| CTI 300 V | average drops | <50 | >50 | | | >50 | >50 | >50 | >50 |
| CTI 400 V | average drops | | >50 | | | >50 | >50 | >50 | >50 |
| CTI 500 V | average drops | | >50 | | | >50 | >50 | >50 | >50 |
| CTI 600 V | average drops | <50 | >50 | | | >50 | >50 | >50 | >50 |
| Mw retention, DH85 1000 h | | 96% | 94% | | | 95% | 93% | 91% | |
| NII retention, DH85 1000 h | | 101% | 103% | | | 89% | 93% | 92% | |

| | | | | | | | | | |
|---|---|---|---|---|---|---|---|---|---|
| *Comparative Examples | | | | | | | | | |

The flame test ratings in Table 6 are rated as "pass" or "fail." "Pass" means that the flame test rating was V0 at the indicated thickness. "Fail" means that the composition had either a V1 rating, a V2 rating, or no rating as defined in Table 5.

As shown in Table 6, Comparative Example 1, wherein the poly(carbonate-siloxane) copolymer is absent, fails to provide a tracking resistance of greater than or equal to 50 drops as determined according to ASTM D-3638-85 at 300 V or 600 V. The addition of titanium dioxide and carbon black to the composition(see Comparative Example 2) resulted in a tracking resistance of greater than or equal to 50 drops as determined according to ASTM D-3638-85 at 300 V to 600 V, but the low-temperature impact resistance was not improved.

Increasing the loading of the core-shell impact modifier from 3 wt% to 5 wt% improved low temperature impact resistance, however, the UL-94 flame test rating at a thickness of 1.2 mm was adversely affected (compare Comparative Example 3 with Comparative Examples 1-2). Increasing the loading of brominated polycarbonate (Br-PC) from 5 wt% to 8 wt% improved the UL-94 flame test rating at a thickness of 1.2 mm from V1 to V0, but there was an accompanying decrease in the low-temperature impact resistance (compare Comparative Example 4 with Comparative Example 3). Increasing the loading of the core-shell impact modifier from 5 wt% to 8 wt% improved the low temperature impact resistance, however, the UL-94 flame test rating at a thickness of 1.2 mm was adversely affected (compare Comparative Example 5 with Comparative Example 4). Therefore, in the absence of poly(carbonate-siloxane) copolymer, achieving both a UL-94 flame test rating at a thickness of 1.2 mm V0 and low-temperature impact resistance of greater than 600 J/m at both -30 °C and -40 °C could not be achieved. However, as shown by Examples 6-7, similar compositions having a poly(carbonate-siloxane) copolymer provided the desired combination of properties. Furthermore, the desired combination of properties could be achieved when the colorants (TiO₂ and carbon black) were present and when they were absent (compare Example 7 with Example 6). Example 8 shows that the amount of poly(carbonate-siloxane) copolymer could be reduced to 1 wt% accompanied by a higher loading of core-shell impact modifier (from 3 to 5 wt%) and a higher loading of brominated polycarbonate (from 5 to 12.5 wt%) resulting in a slight decrease in impact resistance, but did not result in an adverse effect on the UL-94 flame test rating at a thickness of 1.2 mm (compare Example 8 with Example 7).

This disclosure further encompasses the following aspects.

Aspect 1: A thermoplastic composition comprising: 45-90 wt% of a polycarbonate; 5-15 wt% of a brominated polycarbonate; a polycarbonate-siloxane copolymer in an amount effective to provide 0.2-2 wt% siloxane based on the total weight of the thermoplastic composition; 2-10 wt% of a silicone-containing impact modifier comprising a core-shell impact modifier; 0.1-1 wt% of a flame retardant comprising an alkyl sulfonate salt, aromatic sulfone sulfonate, an aromatic sulfonate salt, or a combination thereof; optionally, 0.5-10 wt% titanium dioxide; optionally, 0.1-1 wt% carbon black, wherein the wt% of each component is based on the total weight of the composition, which totals 100 wt%.

Aspect 2: The thermoplastic composition of aspect 1, wherein a molded sample of the composition: not show tracking after at least 50 drops of an aqueous 0.1% ammonium chloride solution measured at 300 volts as determined by ASTM D-3638-85, does not show tracking after at least 50 drops of an aqueous 0.1% ammonium chloride solution measured at 400 volts as determined by ASTM D-3638-85, does not show tracking after at least 50 drops of an aqueous 0.1% ammonium chloride solution measured at 500 volts as determined by ASTM D-3638-85, does not show tracking after at least 50 drops of an aqueous 0.1% ammonium chloride solution measured at 600 volts as determined by ASTM D-3638-85, having a 1.5 millimeter thickness has a UL 94 flame test rating of V0; having a thickness of 3.2 millimeters has a notched Izod impact of greater than 600 joules per meter at -30 °C according to ASTM D256; having a thickness of 3.2 millimeters has a notched Izod impact of greater than 600 joules per meter at -40 °C according to ASTM D256; retains greater than 85% of a molecular weight after 1000 hours in a hydrolytic chamber at 85 °C and 85 % relative humidity according to ASTM D256; retains greater than 72% notched Izod impact strength measured at 23 °C after 1000 h in a hydrolytic chamber at 85 °C and 85 % relative humidity according to ASTM D256; or a combination thereof.

Aspect 3: The thermoplastic composition of any one of the preceding aspects, wherein the polycarbonate-siloxane copolymer has a siloxane content of greater than 30-70 wt%, preferably 35-65 wt%, more preferably 40-60 wt% based on the total weight of the polycarbonate-siloxane copolymer.

Aspect 4: The thermoplastic composition any one of the preceding aspects comprising: 45-90 wt% of a polycarbonate; 5-15 wt% of a brominated polycarbonate; a polycarbonate-siloxane copolymer having a siloxane content of greater than 30-70 wt% siloxane based on the total weight of the copolymer, present in an amount effective to provide 0.2-2 wt% siloxane based on the total weight of the thermoplastic composition; 2-10 wt% of a silicone-containing impact modifier comprising a core-shell impact modifier; 0.1-1 wt% of a flame retardant comprising an alkyl sulfonate salt, an aromatic sulfone sulfonate, an aromatic sulfonate salt, or a combination thereof; 0.5-10 wt% titanium dioxide; and 0.1-1 wt% carbon black, wherein the wt% of each component is based on the total weight of the composition, which totals 100 wt%.

Aspect 5: The thermoplastic composition of any one of the preceding aspects, wherein the polycarbonate comprises a bisphenol A homopolycarbonate.

Aspect 6: The thermoplastic composition of any one of the preceding aspects, wherein the polycarbonate comprises a linear bisphenol A polycarbonate homopolymer having a weight average molecular weight of 26,000 to 40,000 grams per mole, preferably 27,000 to 35,000 grams per mole, as determined by gel permeation chromatography using polystyrene standards and calculated for polycarbonate; or a linear bisphenol A polycarbonate homopolymer having a weight average molecular weight of 15,000 to 25,000 grams per mole, preferably 17,000 to 25,000 grams per mole, as determined by gel permeation chromatography using polystyrene standards and calculated for polycarbonate; or a combination thereof.

Aspect 7: The thermoplastic composition of any one of the preceding aspects, wherein the polycarbonate comprises a linear bisphenol A polycarbonate homopolymer having a weight average molecular weight of 26,000 to 40,000 grams per mole, preferably 27,000 to 35,000 grams per mole, as determined by gel permeation chromatography using polystyrene standards and calculated for polycarbonate; and a linear bisphenol A polycarbonate homopolymer having a weight average molecular weight of 15,000 to 25,000 grams per mole, preferably 17,000 to 25,000 grams per mole, as determined by gel permeation chromatography using polystyrene standards and calculated for polycarbonate, wherein a ratio of the first homopolymer to the second homopolymer is 10:1 to 3:1.

Aspect 8: The thermoplastic composition of any one of the preceding aspects, wherein the brominated polycarbonate has a bromine content of 24 to 27.5 wt%, based on the total weight of the brominated polycarbonate, preferably wherein the brominated polycarbonate comprises brominated bisphenol A polycarbonate units.

Aspect 9: The thermoplastic composition of any one of the preceding aspects, wherein the flame retardant comprises potassium perfluorobutane sulfonate, potassium perfluoroctane sulfonate, tetraethylammonium perfluorohexane sulfonate, sodium benzene sulfonate, sodium toluene sulfonate, potassium diphenylsulfone sulfonate, or a combination thereof, preferably potassium diphenylsulfone sulfonate.

Aspect 10: The thermoplastic composition of any one of the preceding aspects, wherein the impact modifier comprises a silicone elastomer core and a methyl(methacrylate) copolymer shell.

Aspect 11: The thermoplastic composition of any one of the preceding aspects, wherein the thermoplastic composition further comprises 0.1-5 wt% of an additive composition comprising a filler, a reinforcing agent, an antioxidant, a heat stabilizer, a light stabilizer, an ultraviolet light stabilizer, a plasticizer, a lubricant, a mold release agent, an antistatic agent, a colorant, a surface effect additive, a radiation stabilizer, a flame retardant different from an alkyl sulfonate salt or an aromatic sulfonate salt, an anti-drip agent, or a combination thereof.

Aspect 12: The thermoplastic composition of any one of the preceding aspects, wherein an amount of an α,β-unsaturated glycidyl ester copolymer impact modifier is less than 1 wt% based on the total weight of the composition.

Aspect 13: The thermoplastic composition of any one of the preceding aspects comprising: 1-10 wt% of the brominated polycarbonate; a poly(carbonate-siloxane) copolymer having a siloxane content of greater than 30-70 wt% siloxane based on the weight of the copolymer, present in an amount effective to provide 0.2-2 wt% siloxane based on the total weight of the thermoplastic composition; 70-90 wt% of the polycarbonate comprising a linear bisphenol A polycarbonate homopolymer having a weight average molecular weight of 26,000 to 40,000 grams per mole, preferably 27,000 to 35,000 grams per mole, as determined by gel permeation chromatography using polystyrene standards and calculated for polycarbonate; and a linear bisphenol A polycarbonate homopolymer having a weight average molecular weight of 15,000 to 25,000 grams per mole, preferably 17,000 to 25,000 grams per mole, as determined by gel permeation chromatography using polystyrene standards and calculated for polycarbonate, wherein a ratio of the first homopolymer to the second homopolymer is 10:1 to 3:1; 2-10 wt% of the core-shell impact modifier, 0.1-1 wt% of the flame retardant comprising an aromatic sulfone sulfonate; wherein the wt% of each component is based on the total weight of the composition, which totals 100 wt%.

Aspect 14: An article comprising the thermoplastic composition of any one of the preceding aspects, preferably wherein the article is an electrical component, more preferably an electrical connector.

Aspect 15: A method for forming the article according to aspect 14, comprising molding, casting, or extruding the composition to provide the article.

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other (e.g., ranges of "up to 25 wt.%, or, more specifically, 5 wt.% to 20 wt.%", is inclusive of the endpoints and all intermediate values of the ranges of "5 wt.% to 25 wt.%," etc.). "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity and are to be construed to cover both the singular and the plural, unless otherwise indicated herein or clearly contradicted by context. "Or" means "and/or" unless clearly stated otherwise. Reference throughout the specification to "some embodiments", "an embodiment", and so forth, means that a particular element described in connection with the embodiment is included in at least one embodiment described herein, and may or may not be present in other embodiments. In addition, it is to be understood that the described elements may be combined in any suitable manner in the various embodiments. A "combination thereof" is open and includes any combination comprising at least one of the listed components or properties optionally together with a like or equivalent component or property not listed

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

The term "alkyl" means a branched or straight chain, unsaturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH₂-) or, propylene (-(CH₂)₃-)). "Cycloalkylene" means a divalent cyclic alkylene group, -CₙH₂ₙ₋ₓ, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group (e.g., benzyl). The prefix "halo" means a group or compound including one more of a fluoro, chloro, bromo, or iodo substituent. A combination of different halo groups (e.g., bromo and fluoro), or only chloro groups can be present. The prefix "hetero" means that the compound or group includes at least one ring member that is a heteroatom (e.g., 1, 2, or 3 heteroatom(s)), wherein the heteroatoms) is each independently N, O, S, Si, or P. "Substituted" means that the compound or group is substituted with at least one (e.g., 1, 2, 3, or 4) substituents that can each independently be a C₁₋₉ alkoxy, a C₁₋₉ haloalkoxy, a nitro (-NO₂), a cyano (-CN), a C₁₋₆ alkyl sulfonyl (-S(=O)₂-alkyl), a C₆₋₁₂ aryl sulfonyl (-S(=O)₂-aryl)a thiol (-SH), a thiocyano (-SCN), a tosyl (CH₃C₆H₄SO₂-), a C₃₋₁₂ cycloalkyl, a C₂₋₁₂ alkenyl, a C₅₋₁₂ cycloalkenyl, a C₆₋₁₂ aryl, a C₇₋₁₃ arylalkylene, a C₄₋₁₂ heterocycloalkyl, and a C₃₋₁₂ heteroaryl instead of hydrogen, provided that the substituted atom's normal valence is not exceeded. The number of carbon atoms indicated in a group is exclusive of any substituents. For example -CH₂CH₂CN is a C₂ alkyl group substituted with a nitrile.

## Claims

1. A thermoplastic composition comprising:
45-90 wt% of a polycarbonate;
5-15 wt% of a brominated polycarbonate;
a polycarbonate-siloxane copolymer in an amount effective to provide 0.2-2 wt% siloxane based on the total weight of the thermoplastic composition;
2-10 wt% of a silicone-containing impact modifier comprising a core-shell impact modifier;
0.1-1 wt% of a flame retardant comprising an alkyl sulfonate salt, aromatic sulfone sulfonate, an aromatic sulfonate salt, or a combination thereof;
optionally, 0.5-10 wt% titanium dioxide;
optionally, 0.1-1 wt% carbon black,
wherein the wt% of each component is based on the total weight of the composition, which totals 100 wt%.

2. The thermoplastic composition of claim 1, wherein a molded sample of the composition:
does not show tracking after at least 50 drops of an aqueous 0.1% ammonium chloride solution measured at 300 volts as determined by ASTM D-3638-85,
does not show tracking after at least 50 drops of an aqueous 0.1% ammonium chloride solution measured at 400 volts as determined by ASTM D-3638-85,
does not show tracking after at least 50 drops of an aqueous 0.1% ammonium chloride solution measured at 500 volts as determined by ASTM D-3638-85,
does not show tracking after at least 50 drops of an aqueous 0.1% ammonium chloride solution measured at 600 volts as determined by ASTM D-3638-85,
having a 1.5 millimeter thickness has a UL 94 flame test rating of V0;
having a thickness of 3.2 millimeters has a notched Izod impact of greater than 600 joules per meter at -30 °C according to ASTM D256;
having a thickness of 3.2 millimeters has a notched Izod impact of greater than 600 joules per meter at -40 °C according to ASTM D256;
retains greater than 85% of a molecular weight after 1000 hours in a hydrolytic chamber at 85 °C and 85 % relative humidity according to ASTM D256;
retains greater than 72% notched Izod impact strength measured at 23 °C after 1000 h in a hydrolytic chamber at 85 °C and 85 % relative humidity according to ASTM D256;
or a combination thereof.

3. The thermoplastic composition of any one of the preceding claims, wherein the polycarbonate-siloxane copolymer has a siloxane content of greater than 30-70 wt%, preferably 35-65 wt%, more preferably 40-60 wt% based on the total weight of the polycarbonate-siloxane copolymer.

4. The thermoplastic composition any one of the preceding claims comprising
45-90 wt% of a polycarbonate;
5-15 wt% of a brominated polycarbonate;
a polycarbonate-siloxane copolymer having a siloxane content of greater than 30-70 wt% siloxane based on the total weight of the copolymer, present in an amount effective to provide 0.2-2 wt% siloxane based on the total weight of the thermoplastic composition;
2-10 wt% of a silicone-containing impact modifier comprising a core-shell impact modifier;
0.1-1 wt% of a flame retardant comprising an alkyl sulfonate salt, an aromatic sulfone sulfonate, an aromatic sulfonate salt, or a combination thereof;
0.5-10 wt% titanium dioxide; and
0.1-1 wt% carbon black,
wherein the wt% of each component is based on the total weight of the composition, which totals 100 wt%.

5. The thermoplastic composition of any one of the preceding claims, wherein the polycarbonate comprises a bisphenol A homopolycarbonate.

6. The thermoplastic composition of any one of the preceding claims, wherein the polycarbonate comprises
a linear bisphenol A polycarbonate homopolymer having a weight average molecular weight of 26,000 to 40,000 grams per mole, preferably 27,000 to 35,000 grams per mole, as determined by gel permeation chromatography using polystyrene standards and calculated for polycarbonate; or
a linear bisphenol A polycarbonate homopolymer having a weight average molecular weight of 15,000 to 25,000 grams per mole, preferably 17,000 to 25,000 grams per mole, as determined by gel permeation chromatography using polystyrene standards and calculated for polycarbonate; or
a combination thereof.

7. The thermoplastic composition of any one of the preceding claims, wherein the polycarbonate comprises
a linear bisphenol A polycarbonate homopolymer having a weight average molecular weight of 26,000 to 40,000 grams per mole, preferably 27,000 to 35,000 grams per mole, as determined by gel permeation chromatography using polystyrene standards and calculated for polycarbonate; and
a linear bisphenol A polycarbonate homopolymer having a weight average molecular weight of 15,000 to 25,000 grams per mole, preferably 17,000 to 25,000 grams per mole, as determined by gel permeation chromatography using polystyrene standards and calculated for polycarbonate,
wherein a ratio of the first homopolymer to the second homopolymer is 10:1 to 3:1.

8. The thermoplastic composition of any one of the preceding claims, wherein the brominated polycarbonate has a bromine content of 24 to 27.5 wt%, based on the total weight of the brominated polycarbonate, preferably wherein the brominated polycarbonate comprises brominated bisphenol A polycarbonate units.

9. The thermoplastic composition of any one of the preceding claims, wherein the flame retardant comprises potassium perfluorobutane sulfonate, potassium perfluoroctane sulfonate, tetraethylammonium perfluorohexane sulfonate, sodium benzene sulfonate, sodium toluene sulfonate, potassium diphenylsulfone sulfonate, or a combination thereof, preferably potassium diphenylsulfone sulfonate.

10. The thermoplastic composition of any one of the preceding claims, wherein the impact modifier comprises a silicone elastomer core and a methyl(methacrylate) copolymer shell.

11. The thermoplastic composition of any one of the preceding claims, wherein the thermoplastic composition further comprises 0.1-5 wt% of an additive composition comprising a filler, a reinforcing agent, an antioxidant, a heat stabilizer, a light stabilizer, an ultraviolet light stabilizer, a plasticizer, a lubricant, a mold release agent, an antistatic agent, a colorant, a surface effect additive, a radiation stabilizer, a flame retardant different from an alkyl sulfonate salt or an aromatic sulfonate salt, an anti-drip agent, or a combination thereof.

12. The thermoplastic composition of any one of the preceding claims, wherein an amount of an α,β-unsaturated glycidyl ester copolymer impact modifier is less than 1 wt% based on the total weight of the composition.

13. The thermoplastic composition of any one of the preceding claims comprising 1-10 wt% of the brominated polycarbonate;
a poly(carbonate-siloxane) copolymer having a siloxane content of greater than 30-70 wt% siloxane based on the weight of the copolymer, present in an amount effective to provide 0.2-2 wt% siloxane based on the total weight of the thermoplastic composition;
70-90 wt% of the polycarbonate comprising
a linear bisphenol A polycarbonate homopolymer having a weight average molecular weight of 26,000 to 40,000 grams per mole, preferably 27,000 to 35,000 grams per mole, as determined by gel permeation chromatography using polystyrene standards and calculated for polycarbonate; and
a linear bisphenol A polycarbonate homopolymer having a weight average molecular weight of 15,000 to 25,000 grams per mole, preferably 17,000 to 25,000 grams per mole, as determined by gel permeation chromatography using polystyrene standards and calculated for polycarbonate,
wherein a ratio of the first homopolymer to the second homopolymer is 10:1 to 3:1;
2-10 wt% of the core-shell impact modifier,
0.1-1 wt% of the flame retardant comprising an aromatic sulfone sulfonate;
wherein the wt% of each component is based on the total weight of the composition, which totals 100 wt%.

14. An article comprising the thermoplastic composition of any one of the preceding claims, preferably wherein the article is an electrical component, more preferably an electrical connector.

15. A method for forming the article according to claim 14, comprising molding, casting, or extruding the composition to provide the article.

## Patentansprüche

1. Thermoplastische Zusammensetzung, umfassend:
45-90 Gew.-% eines Polycarbonats;
5-15 Gew.-% eines bromierten Polycarbonats;
ein Polycarbonat-Siloxan-Copolymer in einer wirksamen Menge, um 0,2-2 Gew.-% Siloxan, basierend auf dem Gesamtgewicht der thermoplastischen Zusammensetzung, bereitzustellen;
2-10 Gew.-% eines silikonhaltigen Schlagzähmodifikators, umfassend einen Kern-Schale-Schlagzähmodifikator;
0,1-1 Gew.-% eines flammhemmenden Mittels, umfassend ein Alkylsulfonatsalz, ein aromatisches Sulfonsulfonat, ein aromatisches Sulfonatsalz oder eine Kombination davon;
optional 0,5-10 Gew.-% Titandioxid;
optional 0,1-1 Gew.-% Ruß,
wobei die Gew.-% jeder Komponente auf dem Gesamtgewicht der Zusammensetzung basieren, das insgesamt 100 Gew.-% beträgt.

2. Thermoplastische Zusammensetzung nach Anspruch 1, wobei eine geformte Probe der Zusammensetzung:
nach mindestens 50 Tropfen einer wässrigen 0,1 % Ammoniumchloridlösung, gemessen bei 300 Volt, wie durch ASTM D-3638-85 bestimmt, kein Tracking zeigt,
nach mindestens 50 Tropfen einer wässrigen 0,1 % Ammoniumchloridlösung, gemessen bei 400 Volt, wie durch ASTM D-3638-85 bestimmt, kein Tracking zeigt,
nach mindestens 50 Tropfen einer wässrigen 0,1 % Ammoniumchloridlösung, gemessen bei 500 Volt, wie durch ASTM D-3638-85 bestimmt, kein Tracking zeigt,
nach mindestens 50 Tropfen einer wässrigen 0,1 % Ammoniumchloridlösung, gemessen bei 600 Volt, wie durch ASTM D-3638-85 bestimmt, kein Tracking zeigt,
eine Dicke von 1,5 Millimetern aufweisend, eine UL 94-Flammtestbewertung von V0 bei 1,5 Millimetern aufweist;
eine Dicke von 3,2 Millimetern aufweisend, eine Izod-Kerbschlagzähigkeit von über 600 Joule pro Meter bei -30 °C gemäß ASTM D256 aufweist;
eine Dicke von 3,2 Millimetern aufweisend, eine Izod-Kerbschlagzähigkeit von über 600 Joule pro Meter bei -40 °C gemäß ASTM D256 aufweist;
über 85 % einer Molekularmasse nach 1000 Stunden in einer Hydrolysekammer bei 85 °C und 85 % relativer Feuchtigkeit gemäß ASTM D256 behält;
über 72 % einer Izod-Kerbschlagzähigkeit, gemessen bei 23°C, nach 1000 h in einer Hydrolysekammer bei 85 °C und 85 % relativer Feuchtigkeit gemäß ASTM D256 behält;
oder eine Kombination davon.

3. Thermoplastische Zusammensetzung nach einem der vorstehenden Ansprüche, wobei das Polycarbonat-Siloxan-Copolymer einen Siloxangehalt von mehr als 30-70 Gew.-%, vorzugsweise 35-65 Gew.-%, mehr bevorzugt 40-60 Gew.-%, basierend auf dem Gesamtgewicht des Polycarbonat-Siloxan-Copolymers, aufweist.

4. Thermoplastische Zusammensetzung nach einem der vorstehenden Ansprüche, umfassend 45-90 Gew.-% eines Polycarbonats;
5-15 Gew.-% eines bromierten Polycarbonats;
ein Polycarbonat-Siloxan-Copolymer, das einen Siloxangehalt von mehr als 30-70 Gew.-% Siloxan aufweist, basierend auf dem Gesamtgewicht des Copolymers, vorliegend in einer Menge, die wirksam ist, um 0,2-2 Gew.-% Siloxan, basierend auf dem Gesamtgewicht der thermoplastischen Zusammensetzung, bereitzustellen;
2-10 Gew.-% eines silikonhaltigen Schlagzähmodifikators, umfassend einen Kern-Schale-Schlagzähmodifikator;
0,1-1 Gew.-% eines flammhemmenden Mittels, umfassend ein Alkylsulfonatsalz, ein aromatisches Sulfonsulfonat, ein aromatisches Sulfonatsalz oder eine Kombination davon;
0,5-10 Gew.-% Titandioxid; und
0,1-1 Gew.-% Ruß,
wobei die Gew.-% jeder Komponente auf dem Gesamtgewicht der Zusammensetzung basieren, das insgesamt 100 Gew.-% beträgt.

5. Thermoplastische Zusammensetzung nach einem der vorstehenden Ansprüche, wobei das Polycarbonat ein Bisphenol-A-Homopolycarbonat umfasst.

6. Thermoplastische Zusammensetzung nach einem der vorstehenden Ansprüche, wobei das Polycarbonat umfasst
ein lineares Bisphenol-A-Polycarbonat-Homopolymer, das ein Massenmittel von 26.000 bis 40.000 Gramm pro Mol, vorzugsweise 27.000 bis 35.000 Gramm pro Mol, aufweist, wie durch Gelpermeationschromatographie unter Verwendung von Polystyrol-Standards bestimmt und für Polycarbonat berechnet; oder
ein lineares Bisphenol-A-Polycarbonat-Homopolymer, das ein Massenmittel von 15.000 bis 25.000 Gramm pro Mol, vorzugsweise 17.000 bis 25.000 Gramm pro Mol, aufweist, wie durch Gelpermeationschromatographie unter Verwendung von Polystyrol-Standards bestimmt und für Polycarbonat berechnet; oder
eine Kombination davon.

7. Thermoplastische Zusammensetzung nach einem der vorstehenden Ansprüche, wobei das Polycarbonat umfasst
ein lineares Bisphenol-A-Polycarbonat-Homopolymer, das ein Massenmittel von 26.000 bis 40.000 Gramm pro Mol, vorzugsweise 27.000 bis 35.000 Gramm pro Mol, aufweist, wie durch Gelpermeationschromatographie unter Verwendung von Polystyrol-Standards bestimmt und für Polycarbonat berechnet; und
ein lineares Bisphenol-A-Polycarbonat-Homopolymer, das ein Massenmittel von 15.000 bis 25.000 Gramm pro Mol, vorzugsweise 17.000 bis 25.000 Gramm pro Mol, aufweist, wie durch Gelpermeationschromatographie unter Verwendung von Polystyrol-Standards bestimmt und für Polycarbonat berechnet,
wobei ein Verhältnis des ersten Homopolymers zu dem zweiten Homopolymer 10 : 1 bis 3 : 1 beträgt.

8. Thermoplastische Zusammensetzung nach einem der vorstehenden Ansprüche, wobei das bromierte Polycarbonat einen Bromgehalt von 24 bis 27,5 Gew.-%, basierend auf dem Gesamtgewicht des bromierten Polycarbonats, aufweist, vorzugsweise wobei das bromierte Polycarbonat bromierte Bisphenol-A-Polycarbonateinheiten umfasst.

9. Thermoplastische Zusammensetzung nach einem der vorstehenden Ansprüche, wobei das flammhemmende Mittel Kaliumperfluorbutansulfonat, Kaliumperfluoroctansulfonat, Tetraethylammoniumperfluorhexansulfonat, Natriumbenzolsulfonat, Natriumtoluolsulfonat, Kaliumdiphenylsulfonsulfonat oder eine Kombination davon umfasst, vorzugsweise Kaliumdiphenylsulfonsulfonat.

10. Thermoplastische Zusammensetzung nach einem der vorstehenden Ansprüche, wobei der Schlagzähigkeitsmodifikator einen Silikon-Elastomer-Kern und eine Methyl(methacrylat)-Copolymer-Schale umfasst.

11. Thermoplastische Zusammensetzung nach einem der vorstehenden Ansprüche, wobei die thermoplastische Zusammensetzung ferner zu 0,1-5 Gew.-% eine Additivzusammensetzung umfasst, umfassend einen Füllstoff, ein Verstärkungsmittel, ein Antioxidationsmittel, einen Wärmestabilisator, einen Lichtstabilisator, einen Ultraviolettlichtstabilisator, einen Weichmacher, ein Schmiermittel, ein Formtrennmittel, ein Antistatikmittel, einen Farbstoff, ein Oberflächeneffektadditiv, einen Strahlungsstabilisator, ein flammhemmendes Mittel, das sich von einem Alkylsulfonatsalz oder einem aromatischen Sulfonatsalz unterscheidet, ein Antitropfmittel oder eine Kombination davon.

12. Thermoplastische Zusammensetzung nach einem der vorstehenden Ansprüche, wobei eine Menge eines α,β-ungesättigten Glycidylester-Copolymer-Schlagzähmodifikators weniger als 1 Gew.-%, basierend auf dem Gesamtgewicht der Zusammensetzung, beträgt.

13. Thermoplastische Zusammensetzung nach einem der vorstehenden Ansprüche, umfassend zu 1-10 Gew.-% das bromierte Polycarbonat;
ein Poly(carbonat-Siloxan)-Copolymer, das einen Siloxangehalt von mehr als 30-70 Gew.-% Siloxan aufweist, basierend auf dem Gewicht des Copolymers, vorliegend in einer Menge, die wirksam ist, um 0,2-2 Gew.-% Siloxan, basierend auf dem Gesamtgewicht der thermoplastischen Zusammensetzung, bereitzustellen;
70-90 Gew.-% des Polycarbonats, umfassend
ein lineares Bisphenol-A-Polycarbonat-Homopolymer, das ein Massenmittel von 26.000 bis 40.000 Gramm pro Mol, vorzugsweise 27.000 bis 35.000 Gramm pro Mol, aufweist, wie durch Gelpermeationschromatographie unter Verwendung von Polystyrol-Standards bestimmt und für Polycarbonat berechnet; und
ein lineares Bisphenol-A-Polycarbonat-Homopolymer, das ein Massenmittel von 15.000 bis 25.000 Gramm pro Mol, vorzugsweise 17.000 bis 25.000 Gramm pro Mol, aufweist, wie durch Gelpermeationschromatographie unter Verwendung von Polystyrol-Standards bestimmt und für Polycarbonat berechnet,
wobei ein Verhältnis des ersten Homopolymers zu dem zweiten Homopolymer 10 : 1 bis 3 : 1 beträgt;
2-10 Gew.-% des Kern-Schale-Schlagzähmodifikators,
0,1-1 Gew.-% des flammhemmenden Mittels, umfassend ein aromatisches Sulfonsulfonat;
wobei die Gew.-% jeder Komponente auf dem Gesamtgewicht der Zusammensetzung basieren, das insgesamt 100 Gew.-% beträgt.

14. Erzeugnis, umfassend die thermoplastische Zusammensetzung nach einem der vorstehenden Ansprüche, vorzugsweise wobei das Erzeugnis eine elektrische Komponente, mehr bevorzugt ein elektrischer Verbinder ist.

15. Verfahren zum Ausbilden des Erzeugnisses nach Anspruch 14, umfassend ein Formen, ein Gießen oder ein Extrudieren der Zusammensetzung, um das Erzeugnis bereitzustellen.

## Revendications

1. Composition thermoplastique comprenant :
45 à 90 % en poids d'un polycarbonate ;
5 à 15 % en poids d'un polycarbonate bromé ;
un copolymère de polycarbonate-siloxane en une quantité efficace pour apporter 0,2 à 2 % en poids de siloxane par rapport au poids total de la composition thermoplastique ;
2 à 10 % en poids d'un modificateur de choc siliconé comprenant un modificateur de choc cœur-écorce ;
0,1 à 1 % en poids d'un agent ignifugeant comprenant un sel d'alkylsulfonate, un sulfonate de sulfone aromatique, un sel de sulfonate aromatique, ou une de leurs combinaisons ;
éventuellement 0,5 à 10 % en poids de dioxyde de titane ;
éventuellement 0,1 à 1 % en poids de noir de carbone,
dans laquelle le pourcentage en poids de chaque composant est basé sur le poids total de la composition, qui est de 100 % au total.

2. Composition thermoplastique selon la revendication 1, dans laquelle un échantillon moulé de la composition :
ne présente pas de cheminement électrique après application d'au moins 50 gouttes d'une solution aqueuse à 0,1 % de chlorure d'ammonium, mesuré à 300 volts tel que déterminé conformément à la norme ASTM D-3638-85,
ne présente pas de cheminement électrique après application d'au moins 50 gouttes d'une solution aqueuse à 0,1 % de chlorure d'ammonium, mesuré à 400 volts tel que déterminé conformément à la norme ASTM D-3638-85,
ne présente pas de cheminement électrique après application d'au moins 50 gouttes d'une solution aqueuse à 0,1 % de chlorure d'ammonium, mesuré à 500 volts tel que déterminé conformément à la norme ASTM D-3638-85,
ne présente pas de cheminement électrique après application d'au moins 50 gouttes d'une solution aqueuse à 0,1 % de chlorure d'ammonium, mesuré à 600 volts tel que déterminé conformément à la norme ASTM D-3638-85,
lorsqu'il a une épaisseur de 1,5 millimètres, a un indice de test d'inflammabilité UL 94 de V0 ;
lorsqu'il a une épaisseur de 3,2 millimètres, a une résistance au choc Izod sur barreau entaillé supérieure à 600 joules par mètre à -30 °C conformément à la norme ASTM D256 ;
lorsqu'il a une épaisseur de 3,2 millimètres, a une résistance au choc Izod sur barreau entaillé supérieure à 600 joules par mètre à -40 °C conformément à la norme ASTM D256 ;
conserve plus de 85 % de sa masse moléculaire après 1 000 heures dans une chambre hydrolytique à 85 °C et sous une humidité relative de 85 % conformément à la norme ASTM D256 ;
conserve plus de 72 % de sa résistance au choc Izod sur barreau entaillé mesurée à 23 °C après 1 000 heures dans une chambre hydrolytique à 85 °C et sous une humidité relative de 85 % conformément à la norme ASTM D256 ;
ou une de leurs combinaisons.

3. Composition thermoplastique selon l'une quelconque des revendications précédentes, dans laquelle le copolymère de polycarbonate-siloxane a une teneur en siloxane supérieure à 30 à 70 % en poids, de préférence 35 à 65 % en poids, mieux encore 40 à 60 % en poids, par rapport au poids total du copolymère de polycarbonate-siloxane.

4. Composition thermoplastique selon l'une quelconque des revendications précédentes, comprenant
45 à 90 % en poids d'un polycarbonate ;
5 à 15 % en poids d'un polycarbonate bromé ;
un copolymère de polycarbonate-siloxane ayant une teneur en siloxane supérieure à 30 à 70 % en poids de siloxane par rapport au poids total du copolymère, présent en une quantité efficace pour apporter 0,2 à 2 % en poids de siloxane par rapport au poids total de la composition thermoplastique ;
2 à 10 % en poids d'un modificateur de choc siliconé comprenant un modificateur de choc cœur-écorce ;
0,1 à 1 % en poids d'un agent ignifugeant comprenant un sel d'alkylsulfonate, un sulfonate de sulfone aromatique, un sel de sulfonate aromatique, ou une de leurs combinaisons ;
0,5 à 10 % en poids de dioxyde de titane ; et
0,1 à 1 % en poids de noir de carbone,
dans laquelle le pourcentage en poids de chaque composant est basé sur le poids total de la composition, qui est de 100 % au total.

5. Composition thermoplastique selon l'une quelconque des revendications précédentes, dans laquelle le polycarbonate comprend un homopolycarbonate de bisphénol A.

6. Composition thermoplastique selon l'une quelconque des revendications précédentes, dans laquelle le polycarbonate comprend
un homopolymère de polycarbonate de bisphénol A linéaire ayant une masse moléculaire moyenne en masse de 26 000 à 40 000 grammes par mole, de préférence de 27 000 à 35 000 grammes par mole, telle que déterminée par chromatographie par perméation de gel utilisant des étalons de polystyrène et calculée pour le polycarbonate ; ou
un homopolymère de polycarbonate de bisphénol A linéaire ayant une masse moléculaire moyenne en masse de 15 000 à 25 000 grammes par mole, de préférence de 17 000 à 25 000 grammes par mole, telle que déterminée par chromatographie par perméation de gel utilisant des étalons de polystyrène et calculée pour le polycarbonate ; ou
une de leurs combinaisons.

7. Composition thermoplastique selon l'une quelconque des revendications précédentes, dans laquelle le polycarbonate comprend
un homopolymère de polycarbonate de bisphénol A linéaire ayant une masse moléculaire moyenne en masse de 26 000 à 40 000 grammes par mole, de préférence de 27 000 à 35 000 grammes par mole, telle que déterminée par chromatographie par perméation de gel utilisant des étalons de polystyrène et calculée pour le polycarbonate ; et
un homopolymère de polycarbonate de bisphénol A linéaire ayant une masse moléculaire moyenne en masse de 15 000 à 25 000 grammes par mole, de préférence de 17 000 à 25 000 grammes par mole, telle que déterminée par chromatographie par perméation de gel utilisant des étalons de polystyrène et calculée pour le polycarbonate,
dans laquelle le rapport du premier homopolymère au deuxième homopolymère est de 10/1 à 3/1.

8. Composition thermoplastique selon l'une quelconque des revendications précédentes, dans laquelle le polycarbonate bromé a une teneur en brome de 24 à 27,5 % en poids, par rapport au poids total du polycarbonate bromé, de préférence dans laquelle le polycarbonate bromé comprend des motifs polycarbonate de bisphénol A bromé.

9. Composition thermoplastique selon l'une quelconque des revendications précédentes, dans laquelle l'agent ignifugeant comprend du perfluorobutanesulfonate de potassium, du perfluorooctanesulfonate de potassium, du perfluorohexanesulfonate de tétraéthylammonium, du benzènesulfonate de sodium, du toluènesulfonate de sodium, du diphénylsulfonesulfonate de potassium, ou une de leurs combinaisons, de préférence du diphénylsulfonesulfonate de potassium.

10. Composition thermoplastique selon l'une quelconque des revendications précédentes, dans laquelle le modificateur de choc comprend un cœur en élastomère siliconé et une écorce en copolymère de méthacrylate de méthyle.

11. Composition thermoplastique selon l'une quelconque des revendications précédentes, dans laquelle la composition thermoplastique comprend en outre 0,1 à 5 % en poids d'une composition d'additifs comprenant une charge, un agent de renforcement, un antioxydant, un stabilisant à la chaleur, un stabilisant à la lumière, un stabilisant à la lumière ultraviolette, un plastifiant, un lubrifiant, un agent de démoulage, un agent antistatique, un colorant, un additif à effet de surface, un stabilisant aux radiations, un agent ignifugeant différent d'un sel d'alkylsulfonate ou d'un sel de sulfonate aromatique, un agent anti-goutte, ou une de leurs combinaisons.

12. Composition thermoplastique selon l'une quelconque des revendications précédentes, dans laquelle la quantité de modificateur de choc copolymère d'ester glycidylique α,β-insaturé est inférieure à 1 % en poids par rapport au poids total de la composition.

13. Composition thermoplastique selon l'une quelconque des revendications précédentes, comprenant
1 à 10 % en poids du polycarbonate bromé ;
un copolymère de poly(carbonate-siloxane) ayant une teneur en siloxane supérieure à 30 à 70 % en poids de siloxane par rapport au poids du copolymère, présent en une quantité efficace pour apporter 0,2 à 2 % en poids de siloxane par rapport au poids total de la composition thermoplastique ;
70 à 90 % en poids du polycarbonate comprenant
un homopolymère de polycarbonate de bisphénol A linéaire ayant une masse moléculaire moyenne en masse de 26 000 à 40 000 grammes par mole, de préférence de 27 000 à 35 000 grammes par mole, telle que déterminée par chromatographie par perméation de gel utilisant des étalons de polystyrène et calculée pour le polycarbonate ; et
un homopolymère de polycarbonate de bisphénol A linéaire ayant une masse moléculaire moyenne en masse de 15 000 à 25 000 grammes par mole, de préférence de 17 000 à 25 000 grammes par mole, telle que déterminée par chromatographie par perméation de gel utilisant des étalons de polystyrène et calculée pour le polycarbonate,
dans lequel le rapport du premier homopolymère au deuxième homopolymère est de 10/1 à 3/1 ;
2 à 10 % en poids du modificateur de choc cœur-écorce ;
0,1 à 1 % en poids de l'agent ignifugeant comprenant un sulfonate de sulfone aromatique ;
dans laquelle le pourcentage en poids de chaque composant est basé sur le poids total de la composition, qui est de 100 % au total.

14. Article comprenant la composition thermoplastique selon l'une quelconque des revendications précédentes, de préférence dans lequel l'article est un composant électrique, mieux encore un connecteur électrique.

15. Méthode pour former l'article de la revendication 14, comprenant un moulage, une coulée, ou une extrusion de la composition pour former l'article.
